# EUROPEAN PATENT APPLICATION

(11) **EP 2 945 216 A1**
(43) Date of publication of application: **18.11.2015**
(21) Application number: 13870992.8
(22) Date of filing: 26.12.2013
(51) Int. Cl.: H01M 10/60, H01M 2/10

(54) **ASSEMBLED BATTERY RESTRAINT, ASSEMBLED BATTERY RESTRAINING MEMBER, AND BATTERY**

(30) Priority: 11.01.2013 JP 2013003711
(71) Applicant: Futaba Industrial Co. Ltd., Okazaki-shi, Aichi 444-8558 (JP)
(72) Inventor: OKADA, Hiroshi, Okazaki-shi Aichi 444-8558 (JP)
(74) Representative: Otten, Roth, Dobler & Partner mbB Patentanwälte
(86) International application number: PCT/JP2013/084929
(87) International publication number: WO 2014/109251

(57) **Abstract**

A restraint for a group-cell, which is one aspect of the present invention, comprises a main-body part and a shunt part. The main-body part is provided at one end-side of the group-cell in an arrangement direction in which battery cells are arranged. The shunt part extends from the main-body part towards an other end-side of the group-cell in the arrangement direction to form a shunt space between the shunt part and a portion of the group-cell provided at the one end-side in the arrangement direction, wherein an aperture to let in a coolant is formed at the one end-side in the arrangement direction as viewed from the shunt space.

## Description

### CROSS-REFERENCE TO RELATED APPLICATIONS

This international application claims the benefit of Japanese Patent Application No. 2013-003711 filed January 11, 2013 in the Japan Patent Office, and the entire disclosure thereof is incorporated herein by reference.

### TECHNICAL FIELD

The present invention relates to a restraint for a group-cell, a restraining member for a group-cell using this restraint, and a battery comprising a group-cell restrained by this restraining member.

### BACKGROUND ART

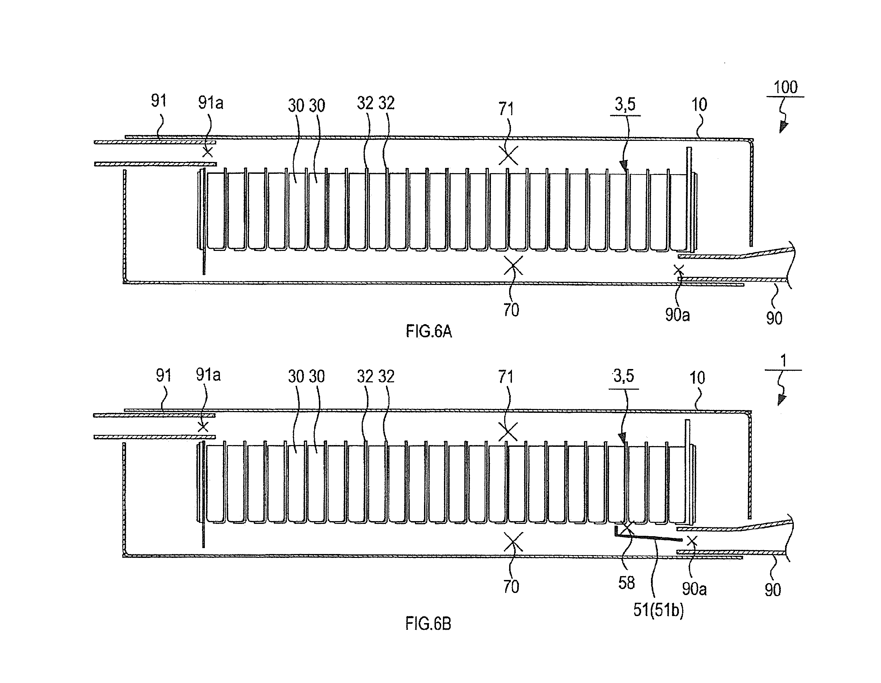

A battery 100, used for a hybrid vehicle, an electric vehicle or the like, comprises a group-cell 3; the group-cell 3 is arranged by alternately layering battery cells 30 and flow-path members 32 and restraining the layered battery cells 30 and flow-path members 32 by a restraining member as illustrated in FIG. 6A. This group-cell 3 is contained in a battery case 10.

When this group-cell 3 is contained in the battery case 10, two flow paths 70 and 71 for a coolant (cooling air) to flow through are formed in the battery case 10.

The first flow path 70 is a flow path to let cooling air, taken from the outside, flow through in an arrangement direction of the battery cell 30.

The second flow path 71 is a flow path to let the cooling air, flowed from the first flow path 70 and passed between the battery cells 30 through each flow-path member 32, flow through in the arrangement direction of the battery cell 30 to be discharged to the outside (for example, see Patent Document 1 below).

In addition, an inlet 90a that sends the cooling air from the outside into the first flow path 70 is provided at one end-side (hereinafter referred to as "inlet side") in the arrangement direction of the battery cell 30; an outlet 91a that discharges the cooling air from the second flow path 71 to the outside is provided at the other end-side (hereinafter referred to as "outlet side") in the arrangement direction.

### PRIOR ART DOCUMENTS

### PATENT DOCUMENTS

Patent Document 1: Published Japanese Translation of PCT International Publication for Patent Application No. 2011-515798

### SUMMARY OF THE INVENTION

### PROBLEMS TO BE SOLVED BY THE INVENTION

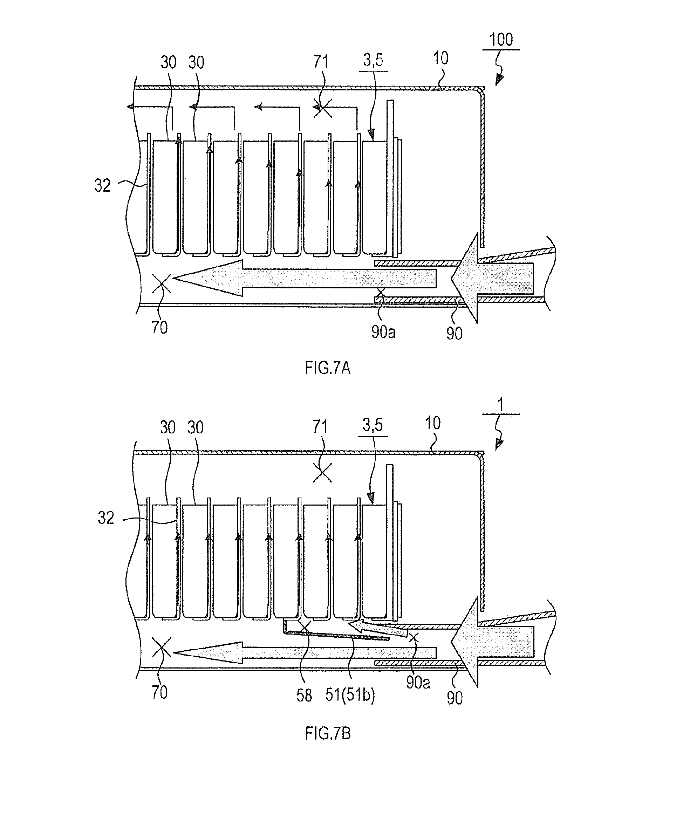

In the battery 100 structured as described above, the flow direction of the cooling air through the first flow path 70 is orthogonal to the flow direction of the cooling air between the battery cells 30 through the flow-path member 32 as illustrated in FIG. 7A. The cooling air has high rectilinear stability at the inlet side of the first flow path 70.

Thus, the cooling air does not flow well between the battery cells 30 at the inlet side compared with the outlet side, and differences in flow amount and flow speed of the cooling air are caused; thus, a difference in cooling effect may occur between the inlet side and the outlet side.

In view of the above, one aspect of the present invention preferably provides a technique that can inhibit a difference in cooling effect between the both ends in the arrangement direction of the battery cells from occuring.

### MEANS FOR SOLVING THE PROBLEMS

A restraint for a group-cell in one aspect of the present invention is a restraint for a group-cell that is made by alternately layering battery cells and flow-path members, and comprises a main-body part and a shunt part, the flow-path members forming flow paths for a coolant between the battery cells.

The main-body part is provided at one end-side of the group-cell in an arrangement direction in which the battery cells are arranged.

The shunt part extends from the main-body part towards the other end-side of the group-cell in the arrangement direction described above to form a shunt space between the shunt part and a portion of the group-cell at the one end-side in the arrangement direction; an aperture to let in the coolant is formed at the one end-side in the arrangement direction as viewed from the shunt space.

A restraining member for a group-cell in another aspect of the present invention comprises a first end-plate, a second end-plate, and restraining bands.

The first end-plate is the above-mentioned restraint, and comprises the main-body part and the shunt part; the second end-plate is provided at the other end-side in the arrangement direction.

The restraining bands are attached to the first end-plate and the second end-plate to hold and restrain the group-cell between the first end-plate and the second end-plate.

A battery in yet another aspect of the present invention comprises a group-cell restrained by the above-mentioned restraining member, and a battery case to contain the group-cell.

The group-cell is fixed inside the battery case with a pair of brackets attached to both ends in the arrangement direction.

The battery in yet another aspect of the present invention, which is the above-mentioned battery, comprises two flow paths formed inside the battery case along the arrangement direction of the group-cell.

The first flow path, which is one of the two flow paths, is for guiding the coolant into the battery case from the outside, and is formed to be located adjacent to one side surface of the group-cell.

The second flow path, which is the other one of the two flow paths, is for discharging the coolant that has flowed from the first flow path through the flow-path members to the outside; among side surfaces of the group-cell, the second flow path is formed to be located adjacent to another side surface of the group-cell opposite to the one side surface that is adjacent to the first flow path.

In this battery, the group-cell restrained by the restraining member is provided inside the battery case such that the aperture formed in the shunt part is disposed to a position facing an inlet that guides the coolant into the first flow path.

### BRIEF DESCRIPTION OF THE DRAWINGS

FIG. 1 is a perspective view showing the whole of a battery and a ventilator that sends cooling air to the battery. However, a battery case is illustrated in sectional drawing to show how a group-cell is contained inside the battery case.
FIG. 2 is an exploded perspective view of a battery stack.
FIG. 3A and FIG. 3B are perspective views of the battery stack, to which brackets are attached. FIG. 3A is a perspective view as viewed from above at an angle; FIG. 3B is a perspective view as viewed from below at an angle.
FIG. 4 is a perspective view of a first end-plate.
FIG. 5A and FIG. 5B are front views of the battery stack, to which the brackets are attached. FIG. 5A is an overall view of the battery stack; FIG. 5B is an enlarged view of the battery stack enlarging a portion where the first end-plate is attached.
FIG. 6A and 6B are schematic views illustrating structures inside batteries. FIG. 6A is a schematic view of a conventional battery; FIG. 6B is a schematic view of the battery in the present embodiment.
FIG. 7A and 7B are schematic views illustrating structures inside batteries to show how cooling air flows inside the batteries in areas where the cooling air flows into the batteries. FIG. 7A is a schematic view of the conventional battery; FIG. 7B is a schematic view of the battery in the present embodiment

### EXPLANATION OF REFERENCE NUMERALS

1... battery, 3... group-cell, 5... battery stack, 9... fan, 10... battery case, 30...battery cell, 32...flow-path member, 50...restuaining member,
51... first end-plate, 51a...main-body part, 51b...shunt part, 51c...leg, 52...second end-plate, 53a to 53d...restraining band, 58...shunt space,
59... aperture, 60...bracket, 70... first flow path, 71...second flow path, 90...air-intake duct, 90a... inlet, 91... exhaust duct

### MODE FOR CARRYING OUT THE INVENTION

Embodiments of the present invention will be explained hereinafter with reference to the drawings. Elements that are the same as the conventional arts will be explained using the same reference numerals.

A battery 1 in the present embodiment is used for a hybrid vehicle, an electric vehicle, or the like.

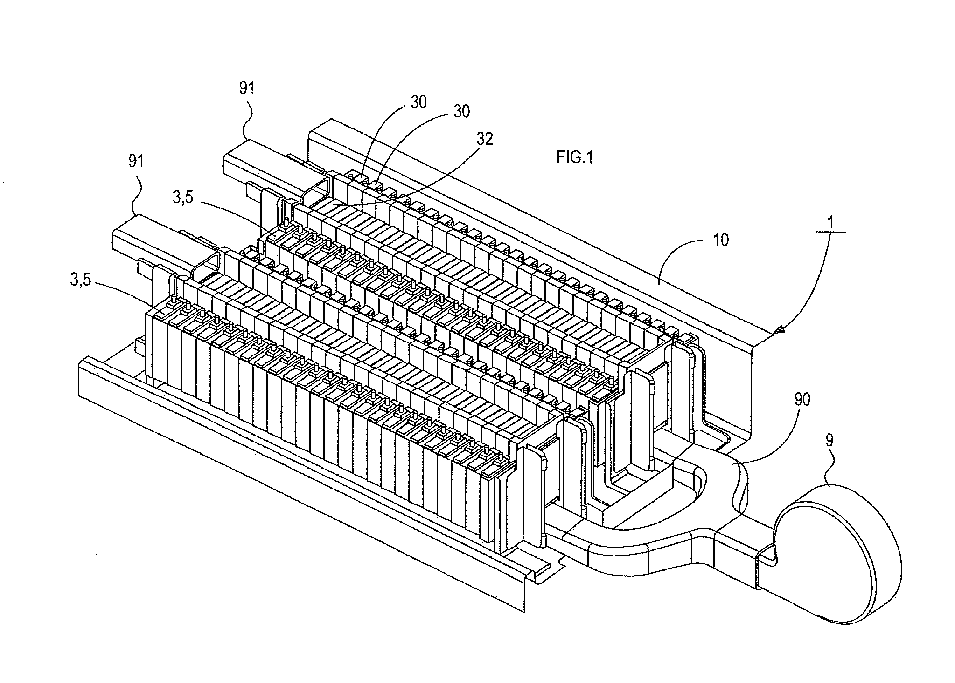

The battery 1 in the present embodiment comprises two group-cells 3 in a battery case 10 as illustrated in FIG. 1.

In the group-cell 3, battery cells 30 and flow-path members 32 are alternately layered, the flow-path members 32 forming flow paths for a coolant between the battery cells 30.

This group-cell 3 is restrained by a restraining member, which will be mentioned later.

Hereinafter, this group-cell 3 that is restrained by the restraining member will be referred to as a battery stack 5.

In FIG. 1, 2, 3A, 3B, 5A, 5B, 6A, 6B, 7A, and 7B, only a part of the battery cells 30 and the flow-path members 32 are marked with reference numerals; nevertheless, other elements identical or similar to the elements that are marked with reference numerals also illustrate the battery cells 30 and the flow-path members 32 individually.

A vehicle comprising the battery 1 (not illustrated) comprises a fan 9 that supplies cooling air (the coolant), an air-intake duct 90, and an exhaust duct 91.

The air-intake duct 90 sends the cooling air supplied by the fan 9 into the battery case 10; the exhaust duct 91 sends the cooling air discharged from inside the battery case 10 to an outside discharge space, which is not illustrated in the drawings.

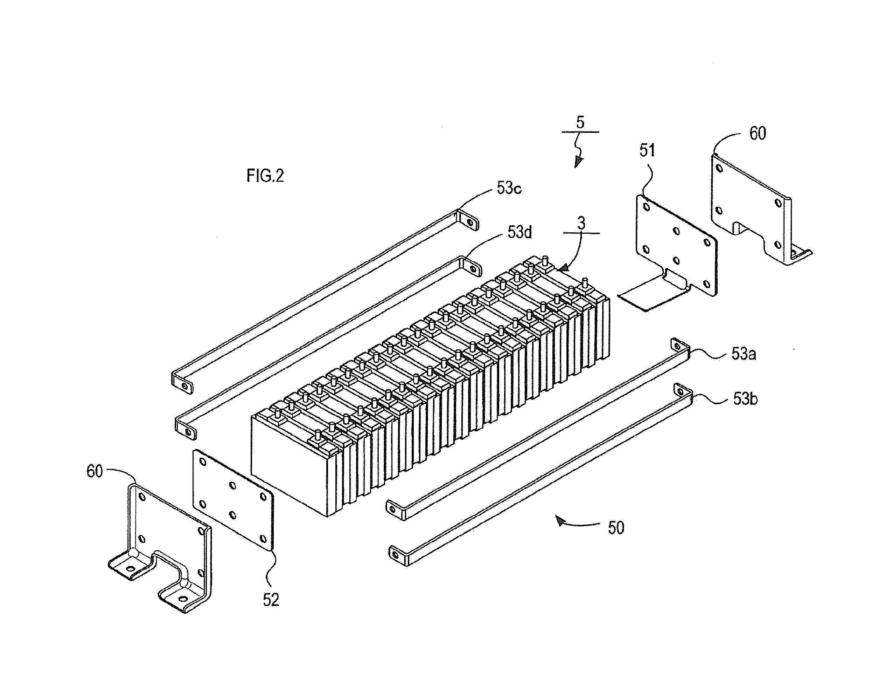

The battery stack 5 is explained next with reference to FIG. 2.

In this battery stack 5, the group-cell 3 is restrained by a restraining member 50.

This restraining member 50 comprises a first end-plate 51, a second end-plate 52, and restraining bands 53a to 53d as restraints.

The first end-plate 51 is provided at one end-side (hereinafter referred to as "inlet side") in an arrangement direction in which the battery cells 30 are arranged; the second end-plate 52 is provided at the other end-side (hereinafter referred to as "outlet side") in the arrangement direction.

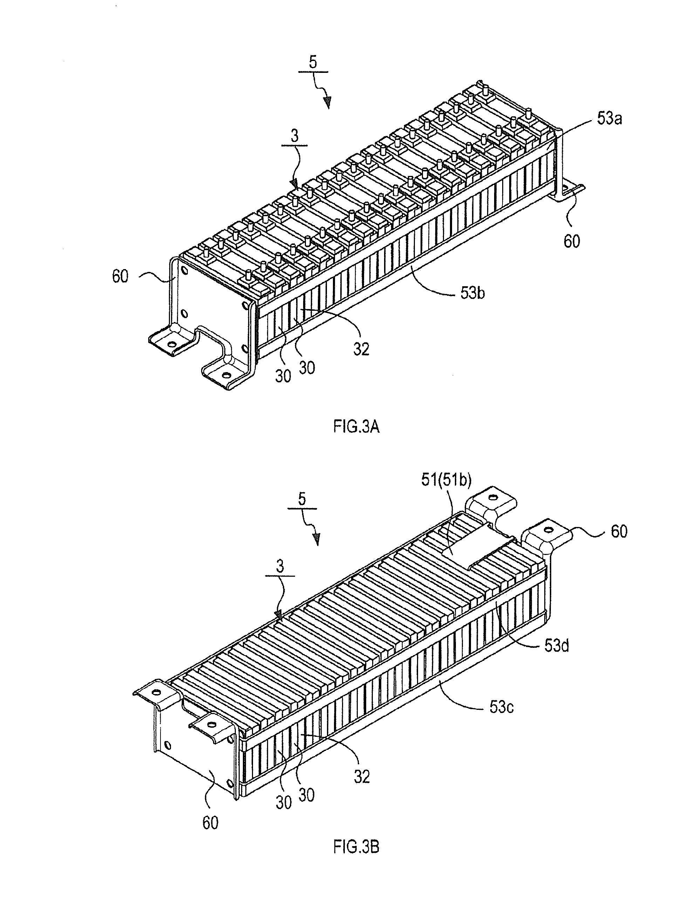

The restraining bands 53a to 53d are each formed into an elongated shape; the group-cell 3 is restrained between the first end-plate 51 and the second end-plate 52 by fixing each end of the restraining bands 53a to 53d to the first end-plate 51 and the second end-plate 52 as illustrated in FIGs. 3A and 3B.

Note that, when the battery stack 5 in the present embodiment is located such that the arrangement direction of the battery cell 30 is parallel to the horizontal plane, the direction perpendicular to the arrangement direction and parallel to the horizontal plane is referred to as a lateral direction, and the direction vertical to both the arrangement direction and the horizontal plane is referred to as a vertical direction.

The restraining bands 53a and 53b are provided on one side (for example, the left side) in the lateral direction along a side surface of the battery cell 30, and the restraining bands 53c and 53d are provided on the other side (for example, the right side) in the lateral direction along a side surface of the battery cell 30.

Then, a bracket 60 is attached to the inlet side and the outlet side of the battery stack 5 each.

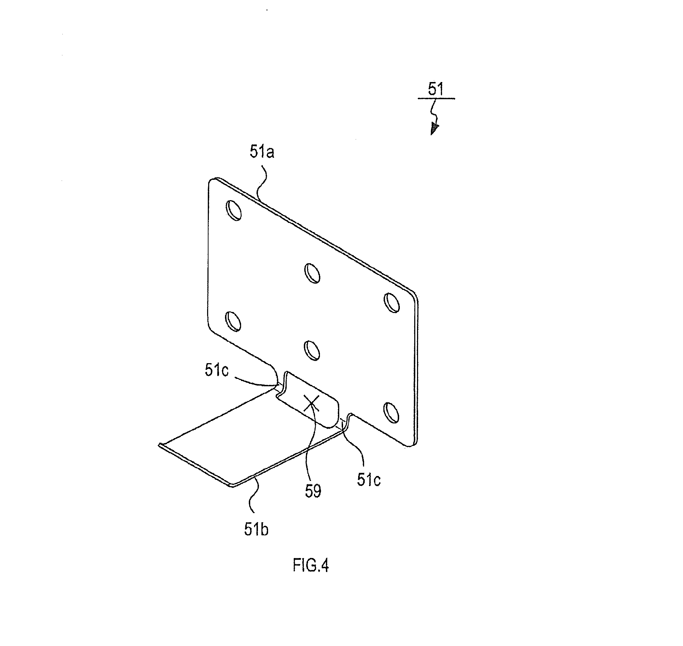

The first end-plate 51 is explained next with reference to FIG. 4.

The first end-plate 51 comprises a main-body part 51a and a shunt part 51 b.

The main-body part 51a is formed into a plate shape, and is provided adjacent to the group-cell 3.

Two legs 51c are extended from a bottom edge of the main-body part 51a, a tip of each leg 51c is bent substantially perpendicular to the main-body part 51a. In this embodiment, the tip of each leg 51c is bent to make an acute angle with the main-body part 51a so that the shunt part 51b is closer to the battery cell 30 as moving towards a tip of the shunt part 51b. This bend angle is appropriately determined according to cross-sectional flow speed, size of a cross-sectional area, or the like.

The shunt part 51b is a plate-shape part having a narrow lateral width compared with the main-body part 51a, which is attached to the tips of the legs 51c.

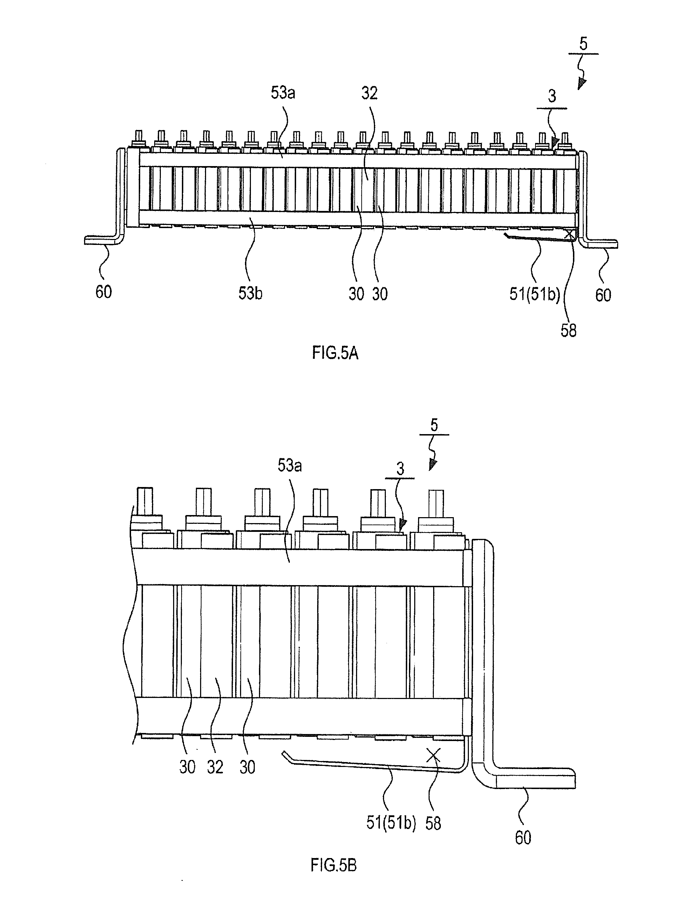

As illustrated in FIGs. 5A and 5B, this shunt part 51b is attached to the legs 51c to slant upward so that its outlet side is located higher than its inlet side, and a tip part of the outlet side is bent upward when the shunt part 51b is attached to the group-cell 3.

The main-body part 51a and the shunt part 51b that structure the first end-plate 51 are integrated with the legs 51c, and are preferably made from metal that transfers heat easily.

When the group-cell 3 is restrained by using this first end-plate 51, the shunt part 51b is positioned so as to extend from the main-body part 51a towards the outlet side.

The shunt part 51b then forms a shunt space 58 between the shunt part 51 b and a portion of the group-cell provided at the inlet side.

A space formed between the legs 51c (see FIG. 4) functions as an aperture 59 to let in a coolant to this shunt space 58.

The battery stack 5, made in such manner, is fixed inside the battery case 10 by a pair of brackets 60 and 60 that are provided at the both ends in the arrangement direction in which the battery cells 30 are arranged.

As illustrated in FIG. 6B, two flow paths 70 and 71 are formed inside the battery case 10, where this battery stack 5 is fixed, in the arrangement direction in which the battery cells 30 are arranged.

Among these two flow paths, the first flow path 70 is a flow path to guide the cooling air into the battery case 10 from the fan 9, which is provided outside the battery case 10, via the air-intake duct 90; the first flow path 70 is formed to be located adjacent to a bottom side surface of the group-cell 3.

Also among these two flow paths, the second flow path 71 is a flow path to discharge the cooling air that has flowed from the first flow path 70 through the flow-path members 32 to the outside of the battery case 10; the second flow path 71 is formed to be located adjacent to a top side surface of the side surfaces of the group-cell 3.

The cooling air discharged outside the battery case 10 by this second flow path 71 is released from the outlet 91a, through the exhaust ducts 91, to an unillustrated discharge space for the cooling air, and is released to the outside of the battery case 10, the outlet 91a being an aperture of the exhaust duct 91 opened inside the battery case 10.

The battery stack 5, which is the group-cell 3 restrained by the restraining member 50, is provided inside the battery case 10 such that the aperture 59 (see FIG. 4) is disposed to a position facing the inlet 90a that guides the coolant into the first flow path 70.

The battery case 10 is tightly sealed except for parts to connect the air-intake duct 90 and the exhaust duct 91.

The battery 1 as described hereinbefore will exert functions and effects as described below.

As illustrated in FIG. 7B, when the cooling air is sent to the battery 1 by driving the fan 9, the cooling air flows into the second flow path 71 from the first flow path 70 via the flow paths formed by the flow-path members 32 provided between each of the battery cells 30, and is discharged to the outside.

During the above described state, the cooling air is forcibly sent between the battery cells 30 that are provided on the first end-plate 51 side in the battery 1 in the present embodiment by the shunt part 51b of the first end-plate 51 letting a part of the cooling air that flows into the first flow path 70 enter the shunt space 58.

Meanwhile, in the above-mentioned battery 100 that does not comprise the shunt part 51b, the cooling air does not flow well between the battery cells 30 at the inlet side compared with the outlet side, and differences in flow amount and flow speed of the cooling air are caused; thus, there is a possibility of a difference in cooling effect to occur. On the contrary, the battery 1 in the present embodiment can inhibit a difference in cooling effect from occurring. As a result, it is possible to achieve a longer life and stabilization of the battery 1.

In addition, the first end-plate 51 in the present embodiment is a plate, into which the main-body part 51a and the shunt part 51b are integrated with the legs 51 c.

Thereby, the shunt part 51b is cooled by being provided inside the first flow path 70 where the cooling air flows; consequently, the main-body part 51 a is also cooled, and thus the battery cell 30 adjacent to the main-body part 51 a is cooled.

As a result, an occurrence of a difference in the cooling effect can be better inhibited.

In addition, by making the first end-plate 51 from a metal that transfers heat easily, an occurrence of a difference in the cooling effect can be even better inhibited.

### (Other Embodiments)

The main-body part 51a and the shunt part 51b of the first end-plate 51 are integrated in the present embodiment; nevertheless, the main-body part 51a and the shunt part 51b may be made as individual parts.

The present invention only has to be consistent with the spirit of the invention described in the claims, and is not limited to the embodiments as described above.

## Claims

1. A restraint for a group-cell arranged by alternately layering battery cells and flow-path members, the flow-path members forming flow paths for a coolant between the battery cells, the restraint comprising:
a main-body part that is provided at one end-side of the group-cell in an arrangement direction in which the battery cells are arranged; and,
a shunt part that extends from the main-body part towards an other end-side of the group-cell in the arrangement direction to form a shunt space between the shunt part and a portion of the group-cell provided at the one end-side in the arrangement direction, wherein an aperture to let in a coolant is formed at the one end-side in the arrangement direction as viewed from the shunt space.

2. A restraining member of a group-cell, the restraining member comprising:
a first end-plate, as the restraint according to Claim 1, that comprises the main-body part and the shunt part;
a second end-plate that is provided at an other end-side in the arrangement direction; and,
restraining bands that are attached to the first end-plate and the second end-plate to hold and restrain the group-cell between the first end-plate and the second end-plate.

3. A battery comprising the group-cell that is restrained by the restraining member according to Claim 2, the battery comprising a battery case to contain the group-cell,
wherein, the group-cell is fixed inside the battery case with a pair of brackets attached to both ends in the arrangement direction.

4. The battery according to Claim 3,
wherein, two flow path are formed inside the battery case along the arrangement direction of the group-cell,
wherein:
a first flow path, which is one of the two flow paths, is a flow path that guides a coolant into the battery case from outside, and is formed to be located adjacent to one side surface of the group-cell;
a second flow path, which is the other one of the two flow paths, is a flow path that discharges a coolant that has flowed from the first flow path through the flow-path members outside; among side surfaces of the group-cell, the second flow path is formed to be located adjacent to another side surface of the group-cell opposite to the one side surface adjacent to the first flow path; and,
the group-cell restrained by the restraining member is provided inside the battery case such that the aperture formed with the shunt part is disposed to a position facing an inlet that guides a coolant into the first flow path.
